# FASCICULE DE BREVET EUROPEEN

(11) **EP 1 267 687 B1**
(45) Date de publication et mention de la délivrance du brevet: **27.08.2003**
(21) Numéro de dépôt: 01919538.7
(22) Date de dépôt: 22.03.2001
(51) Int. Cl.: A47J 31/44

(54) **MACHINE A CAFE ELECTRIQUE AVEC UN RESERVOIR D'EAU PIVOTANT**
ELEKTRISCHE KAFFEEMASCHINE MIT EINEM DREHBAREN WASSERBEHÄLTER
ELECTRIC COFFEE MAKER WITH PIVOTING WATER RESERVOIR

(30) Priorité: 24.03.2000 FR 0004179
(43) Date de publication de la demande: 02.01.2003
(73) Titulaire: SEB S.A., 69130 Ecully (FR)
(72) Inventeur: ROLLAND, Jacky, F-14230 Saint Martin de Fontenay (FR)
(74) Mandataire: Busquets, Jean-Pierre
(86) Numéro de dépôt international: FR0100863
(87) Numéro de publication internationale: WO01072189

(56) Documents cités:
- EP-A- 0 404 688
- DE-C- 19 504 839

## Description

La présente invention se rapporte à une machine à café électrique comprenant un boîtier comportant un socle sur lequel repose un support de récipient d'infusion, un montant solidaire du socle renfermant un groupe d'infusion et portant en sa région supérieure une tête d'infusion surplombant ledit support, et un réservoir d'eau formé d'un corps tubulaire comportant un fond et une paroi latérale et destiné à alimenter ledit groupe d'infusion. Une telle machine est connue du document EP-A-404688.

Dans les machines connues à ce jour, le réservoir d'eau est monté dans le boîtier en un emplacement jouxtant le montant et/ou la tête d'infusion et donc peut occasionner, lors de son remplissage, des éclaboussures ou des déversements malencontreux susceptibles de s'infiltrer dans le boîtier et de venir au contact des composants électriques. En outre, ces écoulements salissent l'état de surface du boîtier.

Pour remédier à ces inconvénients majeurs, les constructeurs ont réalisé des réservoirs d'eau amovibles permettant ainsi à l'utilisateur de les remplir hors du boîtier. Cependant, de tels réservoirs doivent être rigoureusement remis en position et font appel à des clapets et connexions du type auto-étanche dont la fiabilité disparaît suite au trop nombreuses manipulations. En outre, le problème du remplissage de ces réservoirs en cours de fonctionnement n'est pas résolu et se ramène au cas évoqué plus haut.

L'invention a donc pour but de remédier aux inconvénients cités tout en offrant à l'utilisateur une manipulation simple et sécurisante du réservoir, et de réaliser une construction simple tout en étant fiable.

Selon l'invention, le réservoir d'eau est monté pivotant sur le boîtier autour d'un axe vertical (X-X') pour occuper au moins une position de rangement et une position d'extension.

L'utilisateur peut ainsi faire passer le réservoir d'eau de sa position de rangement à sa position d'extension ou dite de remplissage par un simple mouvement de pivotement exercé sur le réservoir et vice-versa.

Selon une autre caractéristique de l'invention, le fond du réservoir comporte une buse de sortie qui est adaptée à être reliée audit groupe d'infusion et qui forme un pivot inférieur pour le réservoir.

Grâce à cette construction, on comprendra que la connexion est soumise principalement à un mouvement de rotation à débattement angulaire faible n'entraînant ainsi aucune contrainte d'usure importante et garantissant dans le temps une bonne étanchéité.

Les caractéristiques et avantages de l'invention ressortiront de la description qui va suivre, prise à titre d'exemple non limitatif, en référence aux dessins annexés dans lesquels :
La figure 1 est une vue en perspective d'une machine à café selon l'invention illustrant un réservoir équipé d'un couvercle en position de rangement;
La figure 2 est une vue analogue à la figure 1 illustrant le réservoir d'eau en position d'extension et sans le couvercle.
La figure 3 est une coupe verticale à échelle agrandie selon la ligne III-III de la figure 1.

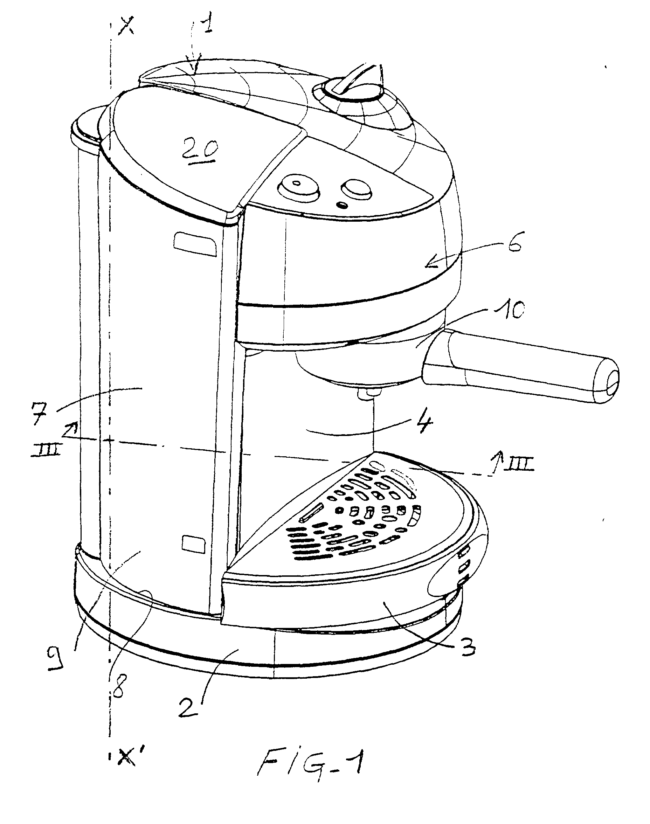

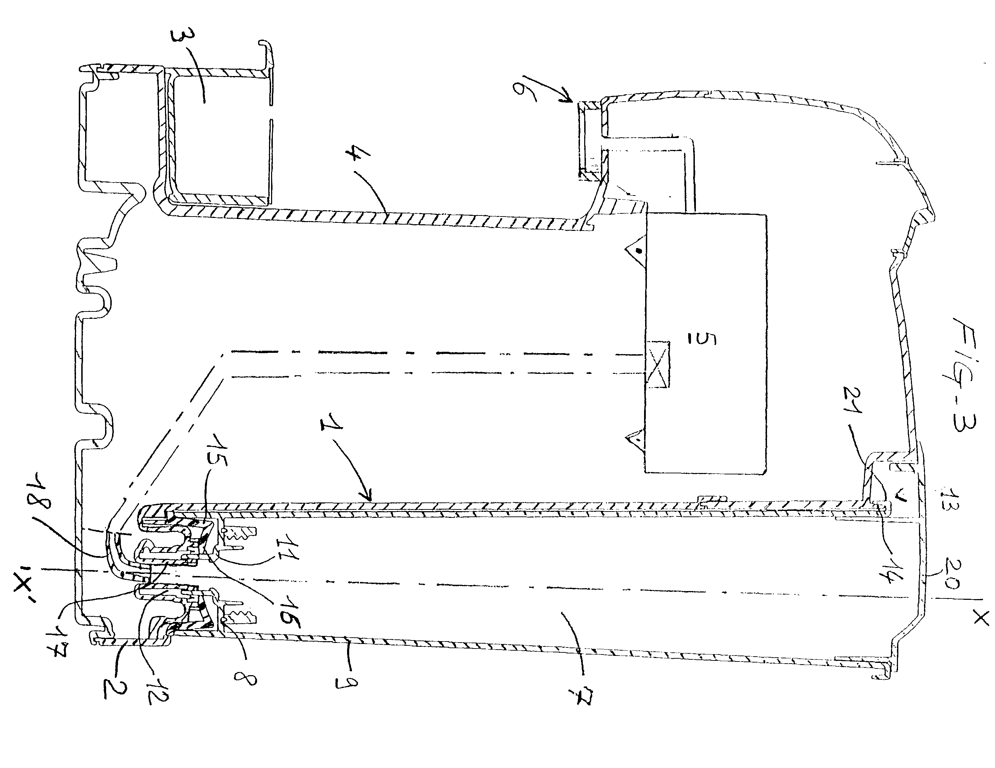

La machine à café électrique représentée à la figure 1 comprend un boîtier 1 comportant un socle 2 sur lequel repose un support 3 de récipient d'infusion (non représenté), un montant 4 solidaire du socle renfermant un groupe d'infusion schématisé en 5 (figure 3) et portant en sa région supérieure une tête d'infusion 6 surplombant ledit support 3, et un réservoir d'eau froide 7 formé d'un corps tubulaire comportant un fond 8 et une paroi latérale 9. Le réservoir 7 est destiné à alimenter le groupe d'infusion 5.

Dans l'exemple de réalisation illustré, le réservoir 7 est monté dans une machine à café du type espresso qui comprend, comme il est connu en soi, une pompe reliée au réservoir d'eau froide et destinée à alimenter sous pression un chauffe-eau, lui-même relié à la tête d'infusion 6 qui est équipée d'une cuillère 10 contenant une dose de café.

Bien entendu, la machine à café peut être du type "goutte à goutte", la tête d'infusion portant dans ce cas un filtre destiné à recevoir du café moulu.

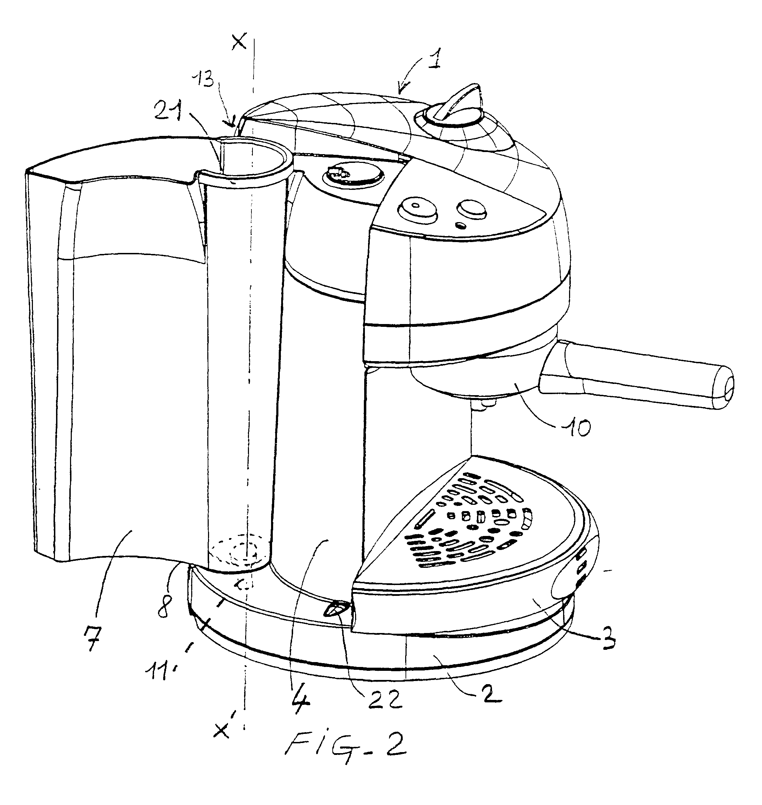

Selon l'invention, le réservoir d'eau 7 est monté pivotant sur le boîtier 1 autour d'un axe vertical référencé X-X' pour occuper au moins une position de rangement et d'utilisation (figures 1 et 3) et une position d'extension ou dite de remplissage (figure 2).

Dans une forme de réalisation préférée et comme on le voit bien sur la figure 3, le fond 8 du réservoir comporte une buse 11 de sortie d'eau qui est adaptée à être reliée audit groupe d'infusion 5 et qui forme un pivot inférieur pour le réservoir 7. Le pivot inférieur 11 ainsi constitué est monté dans un alésage 12 pratiqué dans le socle 2. Pour assurer une meilleure stabilité du pivotement autour de l'axe X-X', le réservoir d'eau 7 porte un pivot supérieur 13 qui vient en prise avec un palier 14 solidaire du montant 4.

Selon une autre caractéristique important de l'invention, le réservoir d'eau 7 est monté amovible sur le socle 2.

De préférence pour réaliser de manière simple et fiable une telle amovibilité, l'alésage comprend un joint annulaire 15 à lèvre souple 16 qui vient enserrer la buse 11 de façon étanche ainsi qu'un connecteur 17 relié à une tubulure 18, elle-même reliée au groupe d'infusion 5, tandis que le palier 14 est formé par une saillie courbe disposée verticalement et sur laquelle vient s'accrocher le pivot supérieur 13 qui présent un crochet 21 qui vient en prise avec ladite saillie. Cette saillie-palier s'étend verticalement selon un arc de cercle pour limiter le débattement du réservoir 7.

De préférence, comme le montre les figures 1 et 2, le socle 2 présente la forme générale d'un cylindre plat sur lequel repose en partie antérieure le support 3 formant bac de résidus d'infusion et ayant une forme hémicylindrique, et en face postérieure le montant 4 et le réservoir d'eau 7. Pour permettre l'intégration esthétique du réservoir et pour assurer une bonne stabilité de la machine au cours du remplissage dudit réservoir, le fond 8 de ce dernier présente la forme d'une lunule (voir les figures 1 et 2) et la paroi latérale 9 présente une face externe qui en position de rangement est comprise dans le volume engendré par le socle.

Afin de réaliser une extension maximale du réservoir 7 hors du socle du boîtier 1, ledit réservoir s'étend le long du montant et l'axe de pivotement vertical X-X' est sensiblement agencé dans la région périphérique du socle 2. Cette extension permet ainsi un remplissage aisé du réservoir sans risque d'éclabousser le boîtier 1.

Le fonctionnement d'un tel réservoir d'eau est le suivant. Le réservoir d'eau 7 étant supposé occuper sa position de rangement illustré notamment à la figure 1, l'utilisateur enlève un couvercle de propreté 20 fermant le réservoir et par le bord supérieur du réservoir (ou par une poignée non représentée) le fait pivoter autour de son axe vertical entraînant ainsi le crochet 21 à glisser sur la saillie 14 et la base 11 à tourner dans le joint annulaire 15, jusqu'à venir en la position d'extension illustrée à la figure 2. En cette position, l'utilisateur a le choix entre remplir directement le réservoir, ou enlever ce réservoir en tirant vers le haut de manière à désaccoupler la buse 11 du joint 15 et le crochet 21 de la saillie 14, afin de permettre son remplissage sous un robinet.

Une fois l'opération de remplissage terminé et le réservoir correctement positionné, l'utilisateur le fait pivoter en sens contraire pour l'amener en sa position de rangement ; position qui peut être verrouillée automatiquement par tout moyen d'encliquetage connu tel que, par exemple, un bossage 22 formé dans le socle 2 et destiné à venir en prise avec le fond 8 du réservoir 7 (figure 2).

## Revendications

1. Machine à café électrique comprenant un boîtier (1) comportant un socle (5) sur lequel repose un support (3) de récipient d'infusion (5), un montant (4) solidaire du socle (2) renfermant un groupe d'infusion et portant en sa région supérieure une tête d'infusion (6) surplombant ledit support, et un réservoir d'eau (7) formé d'un corps tubulaire comportant un fond (8) et une paroi latérale (9) et destiné à alimenter ledit groupe d'infusion, **caractérisé en ce que** le réservoir d'eau (7) est monté pivotant sur le boîtier autour d'un axe vertical (X-X') pour occuper au moins une position de rangement et une position d'extension.

2. Machine à café électrique selon la revendication 1, **caractérisée en ce que** le fond (8) du réservoir (7) comporte une buse (11) de sortie d'eau qui est adaptée à être reliée audit groupe d'infusion (5) et qui forme un pivot inférieur pour le réservoir (7).

3. Machine à café électrique selon la revendication 2, **caractérisée en ce que** le pivot inférieur (11) est monté dans un alésage (12) pratiqué dans le socle (2).

4. Machine à café électrique selon l'une quelconque des revendications précédentes **caractérisée en ce que** le réservoir (7) porte un pivot supérieur (13) qui vient en prise avec un palier (14) solidaire du montant (4).

5. Machine à café électrique selon l'une quelconque des revendications précédentes **caractérisée en ce que** le réservoir d'eau (7) s'étend en position de rangement le long du montant (4) et l'axe de pivotement vertical X-X' est sensiblement agencé dans la région périphérique du socle (2).

6. Machine à café électrique selon l'une quelconque des revendications précédentes **caractérisée en ce que** le réservoir d'eau (7) est monté amovible.

7. Machine à café électrique selon l'une quelconque des revendications précédentes **caractérisée en ce que** le socle (2) présentant la forme générale d'un cylindre plat, le fond (8) du réservoir (7) présente la forme d'une lunule et la paroi latérale (9) présente une face externe qui en position de rangement est comprise dans le volume engendré par le socle (2).

8. Machine à café électrique selon l'une quelconque des revendications précédentes **caractérisée en ce que** le réservoir (7) est monté dans une machine à café du type espresso.

## Patentansprüche

1. Elektrische Kaffeemaschine mit einem Gehäuse (1) mit einem Sockel (5), auf dem ein Träger (3) des Kaffeegefäßes (5) ruht, einem mit dem Sockel (2) fest verbundenen Ständer (4), der eine Brüheinheit umschließt und an seinem oberen Bereich einen Brühkopf (6) trägt, der sich über den Träger erstreckt, und mit einem Wasserbehälter (7), der von einem rohrförmigen Körper mit einem Boden (8) und einer Seitenwand (9) gebildet und zum Speisen der Brüheinheit bestimmt ist, **dadurch gekennzeichnet, daß** der Wasserbehälter (7) am Gehäuse um eine vertikale Achse (X-X') schwenkbar montiert ist, so daß er mindestens eine Ruhe- und Betriebsstellung und einer ausgeschwenkte Stellung einnehmen kann.

2. Elektrische Kaffeemaschine nach Anspruch 1, **dadurch gekennzeichnet, daß** der Boden (8) des Behälters (7) eine Wasseraustrittsdüse (11) aufweist, die zum Verbinden mit der Brüheinheit (5) eingerichtet ist und einen unteren Drehzapfen für den Behälter (7) bildet.

3. Elektrische Kaffeemaschine nach Anspruch 2, **dadurch gekennzeichnet, daß** der untere Zapfen (11) in einer im Sockel (2) ausgebildeten Bohrung (12) montiert ist.

4. Elektrische Kaffeemaschine nach einem der vorangehenden Ansprüche, **dadurch gekennzeichnet, daß** der Behälter (7) einen oberen Drehzapfen (13) trägt, der in Eingriff mit einem Lager (14) kommt, das mit dem Ständer (4) fest verbunden ist.

5. Elektrische Kaffeemaschine nach einem der vorangehenden Ansprüche, **dadurch gekennzeichnet, daß** der Wasserbehälter (7) sich in der Ruhe- und Betriebsstellung längs des Ständers (4) erstreckt und die vertikale Schwenkachse (X-X') im wesentlichen im Umfangsbereich des Sockels (2) ausgebildet ist.

6. Elektrische Kaffeemaschine nach einem der vorangehenden Ansprüche, **dadurch gekennzeichnet, daß** der Wasserbehälter (7) abnehmbar montiert ist.

7. Elektrische Kaffeemaschine nach einem der vorangehenden Ansprüche, **dadurch gekennzeichnet, daß** der Sockel (2) die allgemeine Form eines flachen Zylinders hat, der Boden (8) des Behälters (7) die Form einer Mondsichel hat und die Seitenwand (9) eine Außenseite aufweist, die in der Ruhe- und Betriebsstellung in dem vom Sockel (2) erzeugten Volumen enthalten ist.

8. Elektrische Kaffeemaschine nach einem der vorangehenden Ansprüche, **dadurch gekennzeichnet, daß** der Behälter (7) in einer Espresso-Kaffeemaschine montiert ist.

## Claims

1. Electric coffee machine, including a container (1) comprising a stand (5) on which rests a bearer (3) of an infusion receptacle (5), a mounting (4) forming an integral part of the stand (2), enclosing an infusion group, and carrying in its upper region an infusion head (6) overhanging the said bearer, and a water reservoir (7) formed of a tubular body comprising a base (6) and a lateral wall (9), and intended to feed the said infusion group, **characterised in that** the water reservoir (7) is mounted on the container so as to pivot about a vertical axis(X-X') to occupy at least one storage position and one extension position.

2. Electric coffee machine according to claim 1, **characterised in that** the base (8) of the water reservoir (7) comprises a water outlet pipe (11) which is adapted to be connected to the said infusion group (5), and which forms a lower pivot for the reservoir (7).

3. Electric coffee machine according to claim 2, **characterised in that** the lower pivot (11) is mounted in a boring (12) reamed in the stand (2).

4. Electric coffee machine according to anyone of the preceding claims, **characterised in that** the reservoir (7) bears an upper pivot (13) accommodated in a bearing (14) forming an integral part of the mounting (4).

5. Electric coffee machine according to anyone of the preceding claims, **characterised in that** the water reservoir (7) extends the length of the mounting (4) in the storage position and the vertical pivoting axis (X-X') is substantially fitted in the peripheral region of the stand (2).

6. Electric coffee machine according to anyone of the preceding claims, **characterised in that** the water reservoir (7) is removable.

7. Electric coffee machine according to anyone of the preceding claims, **characterised in that** the stand (2) having the general shape of a flat cylinder, the base (8) of the reservoir (7) is crescent-shaped, and the lateral wall (9) has an outer side which, in the storage position, is included in the volume generated by the stand (2).

8. Electric coffee machine according to anyone of the preceding claims, **characterised in that** the reservoir (7) is mounted in a coffee machine of the espresso type.
